# EUROPÄISCHE PATENTANMELDUNG

(11) **EP 0 598 401 A1**
(43) Veröffentlichungstag der Anmeldung: **25.05.1994**
(21) Anmeldenummer: 93118587.0
(22) Anmeldetag: 18.11.1993
(51) Int. Cl.: F24D 13/02

(54) **Flächenheizkörper und Verfahren zur Herstellung eines Flächenheizkörpers**

(30) Priorität: 17.11.1992 DE 4238825; 01.10.1993 DE 9314932 U
(71) Anmelder: Knappe, Bernhard, D-97508 Obereuerheim (DE)
(72) Erfinder: Knappe, Bernhard, D-97508 Obereuerheim (DE)
(74) Vertreter: Kruspig, Volkmar, Dipl.-Ing.

(57) **Zusammenfassung**

Erfindungsgemäß wird ein Flächenheizkörper mit im Inneren angeordneten, z.B. flexiblen elektrischen Heizleitern (2) in einer Sandwich-Struktur vorgeschlagen, wobei z.B. auf eine Natursteinplatte (20) eine beliebige Kunststeinschicht (1) geformt wird, die die elektrischen Heizleiter (2) vollständig umschließt. Die Formgebung der Kunststeinschicht (1) des Flächenheizkörpers erfolgt in einem einzigen Arbeitsgang, der gleichzeitig die Integration der elektrischen Heizleiter (2) und gegebenenfalls die Aufnahme von Befestigungselementen umfaßt. Der Flächenheizkörper weist zweckmäßigerweise einen Thermostaten (4) auf, der in einem Bereich des Heizkörpers, welcher im wesentlichen frei von Heizleitern (2) ist, angeordnet ist. Gemäß der Erfindung wird die Naturstein- oder auch eine separat gefertigte Kunststeinplatte mindestens als Form-Boden verwendet, wobei auf der Rückseite der Natursteinplatte der elektrische Heizleiter, zum Beispiel mittels Befestigungsstiften, die in Sacklochbohrungen der Platte befindlich sind, vor dem Verguß der Kunststeinmasse fixiert wird.

## Beschreibung

Die Erfindung betrifft einen Flächenheizkörper mit im Inneren angeordneten mäanderförmigen elektrischen Heizleitern und ein Verfahren zur Herstellung eines derartigen Flächenheizkörpers.

Aus der EP 0 025 959 B1 ist ein Verfahren zur Herstellung einer Natursteinplatte für eine Flächenheizung bekannt, die auf einer Seite mäanderförmige Kanäle zur Aufnahme eines Heizrohres oder eines elektrischen Heizleiters aufweist.

Die kreisbogenförmigen Umlenkabschnitte zur Aufnahme des Heizrohres an den Endbereichen werden mittels eines kreisringförmigen Schneidkopfes in die Steinplatte eingeschnitten. Nach dem Einlegen der Heizrohre wird der verbleibende hohle Raum mit einem Füllstoff, beispielsweise einem Kunstharz, ausgefüllt.

Durch eine besondere Gestaltung einer fortlaufenden Reihe von Ringnuten soll je Flächeneinheit der Platte eine möglichst große Länge eines Wärmeträgers untergebracht werden.

Aus dem Vorstehenden ist ersichtlich, daß eine aufwendige mechanische Bearbeitung des verhältnismäßig harten Natursteinwerkstoffes erforderlich ist, wobei zum ausreichenden mechanischen Fixieren der Wärmeträger, z.B. des Heizrohres, ein anschließendes Verfüllen der erzeugten Aussparungen erforderlich ist.

Durch die große Anzahl von Aussparungen, welche zur Aufnahme möglichst großer Längen des Heizrohres notwendig sind, verringert sich die Wärmekapazität der Flächenheizung.

Ein weiterer Nachteil besteht darin, daß mit der Lösung nach EP 0 025 959 nur ebene Flächenheizer ausgebildet werden können und damit die Anwendung der derart hergestellten Heizer eingeschränkt ist.

Auch ist es nicht möglich, für die Heizung erforderliche Bedien- und Anzeigeelemente in einem Arbeitsgang in die Flächenheizung zu integrieren, so daß der Kostenaufwand bei der Herstellung weiter ansteigt.

Es wurde bereits vorgeschlagen, einen Flächenheizkörper durch Umgießen von z.B. auf einem Rahmen angeordneten elektrischen Heizleitern herzustellen. Die Produktivität eines derartigen Verfahrens ist sehr hoch und der Heizkörper weist hervorragende thermische und mechanische Eigenschaften auf, jedoch ist die sichtseitige Oberflächenqualität noch unzureichend.

Aus der DE 37 42 559 A1 ist eine flachbauende, freitragende Bodenplatte für beheizbare Doppelböden bekannt. Bei der dort gezeigten Bodenplatte wird eine metallische, oben offene Wanne, welche zahlreiche Verankerungsöffnungen wenigstens im Wannenboden besitzt, mit in den Verankerungensöffnungen befestigten Haltern versehen. Die Halter sind so ausgebildet, daß diese einen im wesentlichen kreisrunden Heizleiter aufnehmen können, wodurch der Heizleiter in einem vorgegebenen Abstand zum Wannenboden befindlich ist. Die derart mit den Haltern gegenüber dem Wannenboden befestigten Heizleiter werden anschließend mit einem mineralischen Füllmaterial umgeben, welches fließ- oder schüttfähig ist und in die Wanne eingefüllt und durch Rütteln verdichtet wird.

Im Ergebnis der in der DE 37 42 559 A1 gezeigten Verfahrensweise entsteht eine mit dem vorerwähnten mineralischen Material ausgefüllte Wanne, die im Inneren über die verteilt angeordneten Halter befestigte Heizleiter aufweist. Mit dem vorstehend kurz geschilderten Verfahren gelingt es zwar, die Heizleiter im vorgegebenen Abstand und in vorgegebener Lage, bezogen auf den Wannenboden, zu fixieren, jedoch ist die Gesamtkonstruktion aus Wannenboden mit zahlreichenen Verankerungsöffnungen und Haltern aufwendig, so daß sich nicht nur ein hoher Materialeinsatz bei der Realisierung der Bodenplatte, sondern auch ein hoher fertigungstechnischer Aufwand bei deren Herstellung ergibt.

Bei der schweizerischen Patentschrift 499 942 ist ein Flächenheizelement gezeigt, das einen auf einer Matte schlangenförmig befestigten Heizleiter, der elektrisch isoliert und in einem längsnahtgeschweisten und gewölbten Metallmantel angeordnet ist, aufweist. Der vorerwähnte Heizleiter ist dann zusammen mit der hatte in eine Vergußmasse eingelagert, welche auf einer Oberfläche mit einer wärmedämmenden Schicht versehen ist.

Zur Realisierung des Flächenheizelementes gemäß CH-PS 499 942 ist eine Form erforderlich, in welche etwa zwei Drittel der Vergußmasse eingegossen wird. Nachdem die Vergußmasse offensichtlich beginnt auszuhärten, wird auf die Oberfläche der vorab eingebrachten Vergußmasse der Heizleiter gelegt und anschließend mit dem restlichen Drittel der Vergußmasse eingegossen. Bei der dort gezeigten Konstruktion ist nicht sichergestellt, daß der Heizleiter beim Eingießen der restlichen Vergußmasse tatsächlich auf der Oberfläche der zuerst eingefüllten, teilweise ausgehärteten Vergußmasse befindlich bleibt und nicht etwa aufschwimmt oder anderweitig seine Lage verändert. Außerdem ist bei dem dort gezeigten Herstellungsverfahren die Gefahr von Beschädigungen bzw. unzureichend ausgebildeter sichtseitiger Oberfläche des Flächenheizelementes nicht ausgeschlossen. Das heißt, es kann erst nach der Entnahme des kompletten Heizelementes aus der Form festgestellt werden, ob die sichtseitige Oberfläche über die geforderten Qualitätseigenschaften verfügt. Unter Umständen muß, wenn die Qualität nicht ausreichend ist, das gesamte Produkt verworfen werden.

Bei dem elektrisch erwärmbaren, aus plattenförmigen Heizkörpern bestehenden Deckbelag gemäß DE-AS 22 06 268 wird vorgeschlagen, eine in einen Bauwerkstoff eingebettete metallische Armierung mit Befestigungselementen zu versehen, welche dem Fixieren eines elektrischen Heizleiters dienen. Die mit dem Heizleiter versehene Armierung wird dann in die Mörtelschicht eines Deckbelages, z. B. für den Straßen- oder Brückenbau, eingebracht. Eine für Raumheizung erforderliche Wärmeabstrahlung kann bei der Lösung gemäß DE-AS 22 06 268 nicht erreicht werden, da bei einer höheren Heizleistung aufgrund der unterschiedlichen Ausdehnungskoeffizienten zwischen der metallischen Armierung und dem Deckbelag bzw. der Mörtelschicht Risse auftreten, Feuchtigkeit eindringen kann und nach mehr oder weniger kurzer Zeit der Heizkörper funktionsuntüchtig wird.

Aus der DE-OS 23 46 648 ist ein wärmeerzeugender, plattenähnlicher Körper bekannt, welcher aus mit einem Bindemittel versehenen, verkleinerten und gepreßten Holzabfällen besteht. Bei der Herstellung des in der DE-OS 23 46 648 gezeigten Flächenheizkörpers werden zunächst zwei Hälften des Heizköpers gepreßt und durch Pulverinduktionsheizung erhitzt. Zwischen die beiden vorgepreßten Lagen des Flächenheizkörpers wird dann ein Furnierblatt eingelegt, welches mit einem Widerstandsdraht umwickelt ist. Die Konfiguration aus den zwei vorgepreßten Lagen plus dem umwickelten Furnierblatt wird dann wiederum durch Induktionsheizung erhitzt und unter Druck verpreßt.

Bei dieser Verfahrensweise ist also zunächst das Vorpressen zum Herstellen zweier Platten aus einem Gemisch aus Holzabfällen und einem Bindemittel erforderlich, wobei die zwei Lagen dann mit einer weiteren Lage, die einen Widerstandsheizdraht aufweist, verpreßt werden, wodurch der Flächenheizkörper entsteht. Bei dem Flächenheizkörper, welcher aus Holzabfällen besteht, genügt die sichtseitige Oberfläche nicht den geforderten ästhetischen Ansprüchen, so daß der Heizkörper zusätzlich lackiert oder verblendet werden muß. Des weiteren ist aufgrund der Kombination Holzabfälle und Phenolharz die Oberflächentemperatur des Heizkörpers bzw. die maximal umzusetzende bzw. abstrahlbare Wärmeenergie begrenzt. Ebenso ist zum Herstellen einer effektiven Bindung zwischen den Holzabfällen und dem Bindemittel ein energieaufwendiger Warmpreßvorgang erforderlich, so daß die Herstellung derartiger Flächenheizkörper kostenungünstig ist.

Aufgabe der Erfindung ist daher die Schaffung eines Flächenheizkörpers unter Verwendung von elektrischen Heizleitern, welcher in beliebiger Form einfach und kostengünstig herstellbar ist, der über eine hohe Wärmekapazität, großes Wärmeabstrahl- und Heizvermögen sowie eine allen Ansprüchen genügende sichtseitige Oberflächenbeschaffenheit und Qualität verfügt.

Die Lösung der Aufgabe erfolgt mit den Merkmalen der unabhängigen Patentansprüche, wobei die Unteransprüche mindestens zweckmäßige Weiterbildungen und Ausgestaltungen der Lehre der Erfindung darstellen.

Erfindungsgemäß wird ein quasi monolithischer Flächenheizkörper in Sandwich-Struktur mit im Innern angeordneten im wesentlichen flexiblen, elektrischen Heizleitern vorgeschlagen, welcher sichtseitig aus einer separat gefertigten Natur- oder Kunststeinplatte besteht, die vorzugsweise mit einem Kunststeinmaterial, das die Heizleiter vollständig umschließt, vergossen ist, wobei in einem Arbeitsgang die endgültige Formgebung des Flächenheizkörpers, die Integration der elektrischen Heizleiter und die Aufnahme von Bedien-, Anzeige- und Befestigungselementen erfolgt.
Vorteilhafterweise bildet die sichtseitig angeordnete separate Natur- oder Kunststeinplatte einen Teil der Gießform für das Vergießen der Heizleiter.

Der Flächenheizkörper weist zweckmäßigerweise einen Thermostaten auf, der in einem Bereich des Heizkörpers, welcher frei von Heizleitern ist und nicht in direktem Wäremekontakt zum Heizkörper steht, angeordnet ist.

Hierdurch wird in überraschender Weise eine sich aus der Umgebungstemperatur und der Flächenheizkörpertemperatur ergebende Mischtemperatur erfaßt, so daß eine optimale Regelung unter Ausnutzung der Wärmekapazität des Heizkörpers bei gleichzeitigem energiesparenden Betrieb möglich ist.

Vorteilhafterweise sind in dem rückseitigen, der Sichtseite abgewandten, Bereich des Flächenheizkörpers bereits bei der Herstellung Befestigungselemente, z.B. Buchsen, Stifte oder spezielle Halterungselemente integriert.

Die Natursteinplatte oder die Kunststeinplatte, welche mindestens den Bodenteil einer Gießform bildet, weist zweckmäßigerweise in einer Ausgestaltung der Erfindung einseitig bzw. rückseitig eine Vielzahl von Sacklochbohrungen auf, die dem Fixieren von Befestigungs- und Umlenkstiften dienen. Mit Hilfe dieser Befestigungs- und Umlenkstifte wird der elektrische Heizleiter auf der Natursteinplatte z.B. mäanderförmig befestigt.
Hierdurch ist die Lage der Heizleiter, die im nächsten Verfahrensschritt umgossen werden, bestimmt.
Mit Hilfe eines Rahmens, welcher am Außenumfang bzw. den Seitenflächen der Natursteinplatte angebracht wird, entsteht die endgültige Gießform. In diese Form wird dann das flüssige Kunststeinmaterial eingegeben, so daß ein vollständiges gewünschtes Ausfüllen der Gießform erfolgt. Der vorerwähnte Rahmen kann abweichend von der Senkrechten der Front- bzw. Natursteinplatte unter einem Winkel von z.B. 45° angeordnet werden, so daß nach Verguß der Rückseite eine im Querschnitt jeweils im wesentlichen trapezförmige Rückseitenvergußschicht entsteht. Hierdurch wird ein besonders ansprechendes Aussehen des Flächenheizkörpers mit nach hinten verjüngter Rückseite erzielt.

In einer weiteren Ausführungsform weist die separat gefertigte Kunststeinplatte eine Wannen- oder Schalenform auf, so daß der Formrahmen entfallen kann und vorgeformte Heizleiter in den Wannenboden eingelegt und umgossen werden können. Für die spätere Aufnahme des Thermostaten wird ein Formkörper in die Gießform bzw. Wanne an definierter Stelle eingelegt. Dieser Körper bildet also ebenfalls einen Teil der Gießform.

Nachstehend soll die Erfindung näher erläutert werden.

Wie bereits vorerwähnt, besteht der quasi monolithische Flächenheizkörper aus geschichtetem Natur- und Kunststeinmaterial, wobei das Kunststeinmaterial im Innern angeordnete elektrische Heizleiter aufweist oder aus einem separat gefertigten speziell selektierten, sichtseitig oberflächenbehandelten Kunststein, der, wie der Naturstein als Gießform für das Vergießen der Heizleiter dient.

Die rückseitige Formgebung des Flächenheizkörpers erfolgt erfindungsgemäß durch ein Formspritz-, Gieß- oder Preßverfahren, ohne zusätzliche Wärmebehandlung, wobei durch die gewählte Fertigungsgießform z. B. mit einer Natursteinbasisplatte, die später sichtseitig angeordnet ist, eine innige und wärmetechnisch günstige Verbindung zwischen Natur- und Kunststein bzw. Frontplatte und Rückseitenvergußmaterial gegeben ist.

Vorteilhafterweise werden die elektrischen Heizleiter mit Hilfe der Befestigungselemente auf der Natursteinplatte vorfixiert und anschließend mit der Kunststeinmasse rückseitig umspritzt, umgossen oder umpreßt.

Die sichtseitige Oberfläche des Natursteins bleibt dabei erhalten. Durch das Separieren und Vorfertigen der Frontplatte ist eine Gütekontrolle vor dem Vergußschritt möglich, so daß nur qualitativ hochwertige Platten weiterverarbeitet werden. Damit ist ausgeschlossen, daß erst nach der Entnahme der fertigen Flächenheizkörper aus einer Form Qualitätsmängel festgestellt werden können. Bei der Kombination der Sandwichstruktur Kunststeinfrontplatte und Kunststeinrückseitenverguß muß nur das für die Herstellung der Frontplatte erforderliche Material mit kostenintensiven Farbpigmenten versehen werden, wodurch sich die Fertigungskosten des Flächenheizkörpers insgesamt verringern.

Die Heizleiter können auf einem Gitterrahmen gewickelt oder in eine Matte eingebettet, der Gitterrahmen mit der Natursteinplatte über Stifte verbunden und anschließend vergossen werden. In einer Ausführungsform entfallen diese Verbindungsstifte zwischen Natursteinplatte und Gitterrahmen, d. h. der Gitterrahmen bzw. die Matte wird in die Gießform lediglich eingelegt und später umgossen.
Der Gitterrahmen kann auch an einem Formendeckel befestigt und in die Form abgesenkt werden.

Nach dem Auflegen oder Aufwickeln des elektrischen Heizleiters auf dem Gitterrahmen sowie der Anordnung weiterer Elemente und ggf. einer elektrischen Vorprüfung, wird dann in einem Arbeitsgang das vorerwähnte Spritzen, Gießen oder Pressen mittels des flüssigen oder pastösen Kunststeinmaterials vorgenommen.

Bei dieser Ausführungsvariante kann insbesondere bei großen Stückzahlen eine weitere Erhöhung der Produktivität erfolgen.

Wenn das Formgebungsverfahren mittels Rütteltisch oder Vakuumunterstützung durchgeführt wird, ergibt sich eine besonders gute Verbindung zwischen dem Naturstein bzw. der Frontplatte und dem Kunststeinvergußmaterial.

Mittels des vorstehend geschilderten Verfahrens ist es also möglich, einen quasi monolithischen Flächenheizkörper aus einer Natursteinplatte mit Kunststein- oder ähnlichem Material im Sinne einer Sandwich-Struktur herzustellen, welcher die Vorteile einer anspruchsvollen hohen Oberflächenqualität, z.B. von Marmor mit einer optimalen Technologie der Befestigung der Heizleiter verbindet oder bei der Kombination Kunststeinfrontplatte und Rückseitenverguß eine hohe Qualitätsausbeute sichert.

Die Sandwich-Ausbildung mit von außen unzugänglichen Heizleitern gewährt eine hohe Berührungssicherheit bei gleichzeitiger geringer Störanfälligkeit der Gesamtanordnung.

Mittels des erfindungsgemäßen Spritzens, Gießens oder Pressens der Rück- und Seitenflächen sind Strukturierungen zur wirksamen Vergrößerung der rückseitigen Strahlungsfläche sowie die Integration von Halterungen für spezielle Verwendungen des Heizkörpers, z.B. als Wärmeplatte für Speisen, realisierbar.

Weitere Einzelheiten und Merkmale der Erfindung ergeben sich anhand der folgenden Beschreibung bevorzugter Ausführungsbeispiele. Hierbei zeigen
- Fig. 1: einen Längsschnitt durch einen Flächenheizkörper mit bereits integrierten elektrischen Heizleitern
- Fig. 2: den Raum zur Aufnahme des Thermostaten und der äußeren elektrischen Anschlußelemente
- Fig. 3: den auf die Natursteinplatte rückseitig aufgelegten Gitterrahmen einschließlich des aufgeflochtenen Heizleiters
- Fig. 4: eine Teilschnittdarstellung des Flächenheizkörpers mit Umlenkelementen bzw. Nuten zur Aufnahme des Heizleiters auf dem Gitterrahmen.

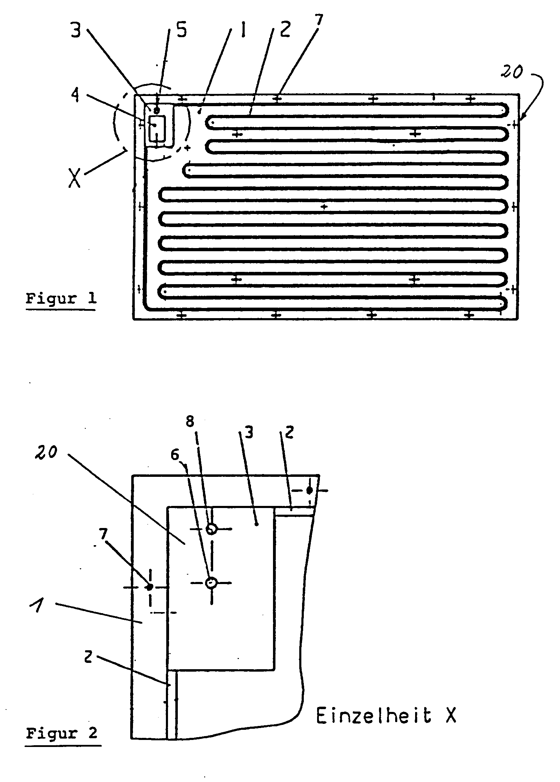

Gemäß Fig. 1 ist innerhalb des Flächenheizkörpers, welcher mindestens rückseitig beispielsweise aus Polymerbeton besteht, ein mäanderförmiger Heizleiter 2 integral angeordnet. Eine dünne z. B. Natursteinplatte 20 bildet die Sichtseite des Heizkörpers.

In der Ausnehmung 3, welche in einem Bereich frei von Heizelementen 2 angeordnet ist, findet der Thermostat 4 sowie die äußeren elektrischen Anschlußelemente (nicht gezeigt) Platz. Zur Funktionsanzeige kann im Bereich der Ausnehmung 3 eine Kontrollampe 5 vorgesehen sein. Für die Thermostatachse sowie die Kontrollampe 5 sind in der Natursteinplatte 20 Durchgangsbohrungen 6, 8 vorgesehen.
Befestigungselemente 7 sind an verschiedenen Stellen der Rückseite des Flächenheizkörpers vorgesehen, so daß eine spätere Befestigung in beliebiger Lage erfolgen kann.

Ein vergrößerter Ausschnitt der Ausnehmung 3 ist in Fig. 2 dargestellt, wobei in einer Durchgangsbohrung 8 ein Anzeigelement, z.B. eine Glimmlampe angeordnet ist. Die Durchgangsbohrung 6 dient der Aufnahme der Betätigungsachse des Thermostaten 4. Im übrigen entsprechen die Bezugszeichen denen der Fig. 1.
Aus den Fig. 1 und 2 ist deutlich zu erkennen, daß im Bereich der Ausnehmung 3 zur Aufnahme des Thermostaten 4 keine Heizleitermäander vorgesehen sind, so daß sich hier die gewünschte Mischtemperatur aus Umgebungstemperatur und Heizkörpertemperatur ausbilden bzw. einstellen kann. Durch diese Ausbildung werden z.B. Temperaturschwankungen, die bei der Raumlüftung entstehen, durch die gespeicherte Wärme des Heizkörpers überbrückt, so daß bei kurzer, effektiver Raumlüftung ein unerwünschtes Einschalten des Thermostaten 4 bzw. des Flächenheizkörpers ausgeschlossen ist.

Dadurch, daß der Thermostat 4 von den Innenwänden bzw. -flächen der Aussparung 3 beabstandet ist, besteht kein direkter Wärmekontakt zwischen dem wärmeempfindlichen Teil des Thermostaten 4, z.B. einem Bimetall und dem Flächenheizkörper. Der zwischen dem Thermostaten 4 und dem Heizkörper bzw. der Kunststeinschicht 1 befindliche Luftzwischenraum verbessert das vorerwähnte Ansprech- und Regelverhalten, so daß trotz der Anordnung des Thermostaten 4 in dem Heizkörper eine Quasi-Raumtemperatur erfaßt wird.

Die Ausnehmung 3 ist rückseitig von einem nicht gezeigten Deckel verschlossen, der einerseits den Thermostaten 4 anpreßt, so daß hier auf separate Befestigungsmittel verzichtet werden kann und andererseits dem Herausführen der äußeren Anschlußelemente sowie der Abdichtung dient.

Vorteilhafterweise wird ein mit dem elektrischen Heizleiter 2 in Serie geschalteter Temperaturwächter zur Erfassung von Übertemperaturen (nicht gezeigt), z.B. mittig bzw. im Schwerpunkt des Flächenheizkörpers angeordnet. Alternativ kann beim Vergießen ein metallischer Draht oder ein metallisches Band eingelegt werden, wobei ein freies Ende des Bandes in die Aussparung 3 reicht und dort mit dem Temperaturwächter kontaktiert wird. Es liegt im Sinne der Erfindung, anstelle eines Bimetall-Thermostaten eine elektrische Temperaturregeleinrichtung zu verwenden.

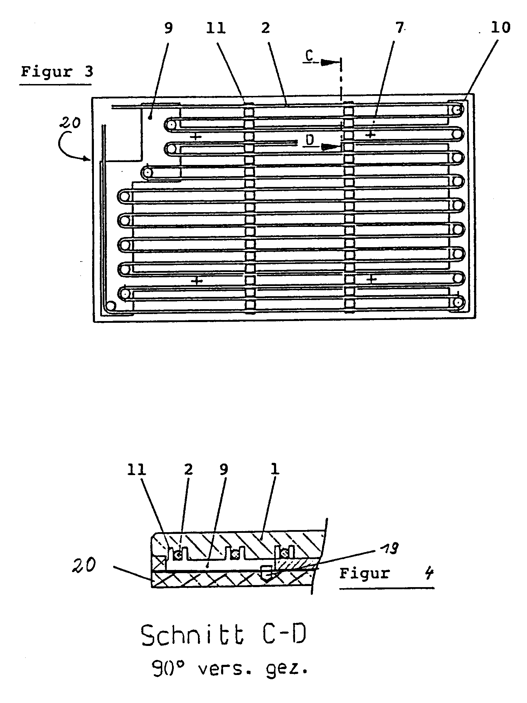

Mit der Fig. 3 wird eine Ausführungsform der Erfindung unter Nutzung des Gitterrahmens 9 illustriert. Wie erkennbar, ist der elektrische Heizleiter 2 auf den Gitterrahmen 9 aufgeflochten oder mit diesem verklebt, wobei durch die scheibenförmigen Umlenkelemente 10 eine Mäanderform des elektrischen Heizleiters 2 realisiert wird.

Mittels der Nuten 11 auf den Streben des Gitterrahmens 9 erfolgt ein weiteres Fixieren des Heizleiters 2 durch das Eindrücken desselben in die Nuten 11.

Die Ausbildung der Nuten 11 wird durch die Darstellung nach Fig. 4 besonders deutlich, wobei auch hier das vollständige Umschließen des Gitterrahmens 9 einschließlich des Heizleiters 2 durch den die Rückseite des Flächenheizkörpers bildenden Kunststein 1 sichtbar ist.

Der Gitterrahmen 9 kann mittels integrierter Stifte 19, die in zugehörige Sacklochbohrungen der Natursteinplatte 20 einrasten, für den Vergußprozeß fixiert werden.
In einer Ausführungsform der Erfindung können zwei Reihen von Umlenkelementen 10, die jeweils auf einem mit entsprechenden Stiften 19 versehenen Trägerstreifen ausgebildet sind, verwendet werden. Diese Trägerstreifen werden zum Beispiel links und rechts auf der Rückseite der Natursteinplatte fixiert. Anschließend wird auf die Trägerstreifen der elektrische Heizleiter 2 aufgewickelt. Ebenso können in einer weiteren Ausführungsform der Erfindung an definierten Stellen, vorteilhafterweise im links- und rechtsseiten Randbereich der Natursteinplatte 20, eine Vielzahl von Befestigungs- und Umlenkstifte vorgesehen sein. Diese Befestigungs- und Umlenkstifte werden in entsprechende Sacklochbohrungen der Natursteinplatte 20 eingesteckt und dienen mit ihrem freien, gegebenenfalls hakenförmig ausgeformten Ende zum Fixieren der elektrischen Heizleiter 2. In beiden letzgenannten Fällen ist die Verwendung eines kompletten, vorgefertigen Gitterrahmens 9 nicht notwendig. Die vorerwähnten Trägerstreifen können eine selbstklebende Oberfläche besitzen, wodurch ein leichtes Befestigen auf der Rückseite der Frontplatte möglich ist.

Bei der Nutzung von Gitterrahmen 9 können ein oder mehrere Standard-Gitterrahmen 9 mit vorgebbarer elektrischer Leistung der enthaltenen Heizleiter 2 vorgesehen werden, welche in unterschiedlich dimensionierte Form-Rahmen einlegbar und mit unterschiedlichen Natursteinplatten 20 verbindbar sind. Neben der Anpassung an unterschiedliche räumlich/ geometrische Verhältnisse, ist auch eine leichtere elektrische Anpassung durch Reihen- oder Parallelschaltung der derart gebildeten Heizleitergruppen möglich.

In einer Ausführungsform der Erfindung wird ein flexibler isolierter elektrischer Heizleiter mit einem Widerstand von 5 Ω je m Länge benutzt, wobei ca. 13 m Heizleiter auf dem Gitterrahmen 9 aufgeflochten sind, so daß sich eine Heizleistung von ca. 800 W ergibt.

Die Realisierung des Verfahrens erfolgt beispielsweise dadurch, daß ein speziell ausgebildeter Hilfsformrahmen, welcher über eine Erhebung zur späteren Aufnahme von Befestigungselementen bzw. der Bedien- und Anzeigeelemente verfügt, verwendet wird, wobei Anschlußenden des Heizleiters 2 in einen abgedeckten Bereich, der formmassefrei bleibt, einmünden.

In diesem abgedeckten Bereich kann dann die spätere Montage des Thermostaten sowie der elektrische Außenanschluß erfolgen.

Alternativ kann die elektrische Kontaktierung und der Anschluß des Thermostaten bereits vor dem Umgießen erfolgen, so daß nur der elektrische Außenanschluß sowie die Betätigungsachse des Thermostaten herausgeführt ist. Hierbei wird die komplette Thermostat- und/oder Bedien- und Anschlußeinheit vorgefertigt und umgossen, so daß ein u. U. kritisches Entformen entfällt.

Nach dem Aufwickeln des Heizleiters wird der Hilfsformrahmen mit einer plastischen Masse eines Kunststeins, z.B. Polymerbeton, gegebenenfalls unter Anwendung von Druck, Unterdruck oder mechanischen Schwingungen aufgefüllt. Der den Form-Boden bildende z. B. Naturstein geht dabei eine innige Verbindung mit dem Kunststeingußmaterial ein.

Durch die Beigabe von z.B. Farbstoffen oder Naturstein-Füllmitteln, sind eine Vielzahl von Gestaltungsmöglichkeiten des Flächenheizkörpers, insbesondere für den sichtbaren Randbereich gegeben.

Nach erfolgter Aushärtung des Polymerbetons kann der Hilfsformrahmen abgenommen werden, wobei durch die gewählte Herstellungsart und das verwendete Material sich Nacharbeiten auf ein Mindestmaß reduzieren und eine ausgezeichnete Oberflächenqualität auf der Sichtseite ergibt.

Im Falle der Verwendung des Gitterrahmens wird dieser mit vorher aufgeflochtenem Heizleiter und ggf. mit äußeren Befestigungselementen auf der Natursteinplatte, d. h. dem Form-Boden fixiert und, wie vorstehend beschrieben, umspritzt bzw. umgossen oder umpreßt.

Mit dem Einsetzen des Thermostaten 4 und dem elektrischen Anschluß desselben und, wenn erforderlich, dem Verschluß der Aussparung 3 ist die Heizung fertiggestellt und betriebsbereit.

Mittels der Erfindung ist also zusammenfassend die Schaffung eines neuartigen Flächenheizkörpers in Sandwich-Struktur möglich, der durch das spezielle Herstellungsverfahren über eine hohe Wärmekapazität verfügt, da keine Hohlräume oder nachträglich zu verfüllende Aussparungen für die Heizleiter vorhanden sind. Im Sinne der Erfindung kann anstelle der Natursteinplatte auch ein anderes Material für die Sichtseite des Heizkörpers verwendet werden.

Da der verwendete Kunststein im Verhältnis zu Naturstein eine geringere Masse besitzt und nur der Sichtbereich aus hochwertigem Naturstein besteht, kann der Flächenheizkörper an Wänden geringer Tragfestigkeit befestigt werden. Auch ist durch die Massereduzierung eine leichtere Montage des Heizkörpers möglich.

## Patentansprüche

1. Flächenheizkörper mit im Innern angeordneten mäanderförmigen elektrischen Heizleitern,
**gekennzeichnet durch**
eine in einem Formspritz-, Gieß- oder Preßverfahren gebildete quasi monolithische Sandwich-Struktur beliebiger Form aus einer Frontplatte und einer Rückseitenvergußschicht, wobei die Frontplatte mindestens einen Teil der Spritz-, Gieß- oder Preßform bildet und wobei die vorzugsweise flexiblen elektrischen Heizleiter (2) vollständig umschlossen bzw. umgeben sind.

2. Flächenheizkörper nach Anspruch 1,
**dadurch gekennzeichnet**,
daß die Sandwich-Struktur aus Kunststein (1), vorzugsweise Polymerbeton und einer Front-Natursteinplatte (20) besteht.

3. Flächenheizkörper nach Anspruch 1,
**dadurch gekennzeichnet**,
daß der Kunststein (1) eine Aussparung (3) in einem Bereich, welcher frei von mäanderförmig angeordneten elektrischen Heizleitern (2) ist, zur Aufnahme eines Thermostaten (4) aufweist, wobei der Thermostat (4) nicht in direktem Wärmekontakt zum Kunststein (1) steht.

4. Flächenheizkörper nach Anspruch 1 bis 3,
**dadurch gekennzeichnet**,
daß der Kunststein (1) in einem rückseitigen Bereich integrierte Befestigungs- bzw. Halterungselemente (7) aufweist.

5. Flächenheizkörper nach Anspruch 1,
**dadurch gekennzeichnet**,
daß der Kunststein (1) einen vorgefertigten Gitterrahmen (9) oder eine Matte mit auf- beziehungsweise eingeflochtenen flexiblen elektrischen Heizleitern (2) allseitig umschließt, welcher auf der Rückseite der Natursteinplatte (20) fixiert ist.

6. Flächenheizkörper nach Anspruch 5,
**dadurch gekennzeichnet**,
daß der Gitterrahmen (9) aus Kunststein, vorzugsweise Polymerbeton, besteht.

7. Flächenheizkörper nach Anspruch 5 und 6,
**dadurch gekennzeichnet**,
daß der Gitterrahmen (9) über integrierte scheibenförmige Umlenkelemente (10) und Nuten (11) zur Aufnahme des elektrischen Heizleiters (2) sowie über äußere Befestigungselemente (7) verfügt.

8. Flächenheizkörper nach Anspruch 1 bis 4,
**dadurch gekennzeichnet**,
daß die elektrischen Heizleiter (2) auf unmittelbar in Sacklochbohrungen der Front-Natursteinplatte (20) fixierten Befestigungs- und Umlenkstiften geflochten sind.

9. Flächenheizkörper nach Anspruch 1,
**dadurch gekennzeichnet**,
daß die Sandwich-Struktur aus Kunststein-Rückseitenvergußschicht und einer separat gefertigten Kunststein-Frontplatte mit optimierter sichtseitiger Oberfläche beziehungsweise Oberflächenstruktur besteht.

10. Verfahren zur Herstellung eines Flächenheizkörpers mit im Inneren angeordneten mäanderförmigen elektrischen Heizleitern, umfassend folgende Schritte:
- Vorfertigung einer später sichtseitig angeordneten Frontplatte aus Natur- oder Kunststein derart, daß die vorgefertigte Frontplatte mindestens als Teil einer Gießform verwendet werden kann,
- Auf- beziehungsweise Einlegen gegebenenfalls vorkonfektionierter elektrischer Heizleiter auf die beziehungsweise in die Rückseite der vorgefertigten Frontplatte,
- Aufbringen einer Rückseitenvergußschicht unter vollständigem Einschluß der Heizleiter derart, daß die Heizleiter, bezogen auf die Gesamtdicke der entstandenen Sandwichstruktur, im wesentlichen in der Mitte befindlich sind.
